# EUROPEAN PATENT APPLICATION

(11) **EP 2 818 994 A1**
(43) Date of publication of application: **31.12.2014**
(21) Application number: 14172028.4
(22) Date of filing: 11.06.2014
(51) Int. Cl.: G06F 3/044, G06F 3/0488, G08G 5/00

(54) **Touch screen and method for adjusting touch sensitive object placement thereon**

(30) Priority: 26.06.2013 US 201313927943
(71) Applicant: Honeywell International Inc., Morristown, NJ 07962-2245 (US)
(72) Inventor: Dostal, Martin, Morristown, NJ 07962-2245 (US); Eichler, Zdenek, Morristown, NJ 07962-2245 (US)
(74) Representative: Houghton, Mark Phillip

(57) **Abstract**

A device and method for adjusting the position and/or the size of touch sensitive objects (706-712) in response to adaptive conditions, such as turbulence, vibration, and/or G forces, in which larger or spaced touch sensitive objects (706-712) would be beneficial.

## Description

### TECHNICAL FIELD

The exemplary embodiments described herein generally relate to touch screens and more particularly to modifying touch sensitive object placement.

### BACKGROUND

World wide air traffic is projected to double every ten to fourteen years and the International Civil Aviation Organization (ICAO) forecasts world air travel growth of five percent per annum until the year 2020. Such growth may have an influence on flight performance and may increase the workload of the flight crew. One such influence on flight performance has been the ability for the flight crew to input data while paying attention to other matters within and outside of the cockpit, especially during periods when movement makes it difficult to touch the screen in the desired manner or location. The ability to easily and quickly input data can significantly improve situational awareness of the flight crew.

Many electronic devices, such as aircraft flight deck operational equipment, cursor control devices (CCDs), hard knobs, switches, and hardware keyboards, are increasingly being replaced by touch screens. A touch screen offers intuitive input for a computer or other data processing devices, but may be affected by movement of the touch screen and/or the pilot caused by, for example, turbulence, aircraft vibration, and/or G forces.

However, owing to screen size, resolution limitations and the amount of information presented on the screen, designing interactive targets (touch sensitive objects) large enough to be suitable for both normal and adverse conditions would cause unwelcome reduction of effective screen space.

Accordingly, it is desirable to provide a touch screen whose input is adaptive to adverse conditions, for example, movement caused by turbulence, G forces, and/or equipment vibrations. Furthermore, other desirable features and characteristics of the exemplary embodiments will become apparent from the subsequent detailed description and the appended claims, taken in conjunction with the accompanying drawings and the foregoing technical field and background.

### BRIEF SUMMARY

An apparatus comprising a system configured to determine an adaptive condition; a touch screen having a first dimension in a first direction and a second dimension in a second direction, and configured to display a container, having a third dimension in the first direction that is less than the first dimension, and that displays a plurality of touch sensitive objects aligned in the first direction; and a touch screen controller configured to, when the adaptive condition is sensed; expand the container further in the first direction to a fourth dimension, if the fourth dimension is less than the first dimension; expand the container in a second direction and repositioning a portion of the objects in the second direction if the fourth dimension is greater than the first dimension.

Another apparatus comprises a sensor configured to sense movement; a touch screen having a first dimension in a first direction and a second dimension in a second direction, and configured to display a menu having a third dimension in the first direction that is less than the first dimension, and that displays a plurality of touch sensitive objects aligned in the first direction; and a touch screen controller configured to, when the movement is sensed, expand the menu further in the first direction to a fourth dimension, if the fourth dimension is less than the first dimension; expand the container in the second direction and repositioning a portion of the objects in the second direction if the fourth dimension would be greater than the first dimension.

A method is provided for modifying the size of a container on a touch screen, the touch screen having a first dimension in a first direction and a second dimension in a second direction, comprising determining an adaptive condition; displaying the container having a third dimension in the first direction that is less than the first dimension and having a plurality of touch sensitive objects aligned in the first direction; expanding the container further in the first direction to a fourth dimension, when the adaptive condition is determined and if the fourth dimension is less than the first dimension; and expanding the container in a second direction and repositioning a portion of the objects in the second direction when the adaptive condition is determined and if the third dimension is greater than the first dimension.

### BRIEF DESCRIPTION OF THE DRAWINGS

The present invention will hereinafter be described in conjunction with the following drawing figures, wherein like numerals denote like elements, and
FIG. 1 is a block diagram of an aircraft system for presenting images on a display;
FIGS. 2 and 3 are representative diagrams of a touch screen in accordance with a first exemplary embodiment;
FIG. 4 is a representative diagram of a touch screen in accordance with a second exemplary embodiment;
FIGS. 5 and 6 are representative diagrams of a touch screen in accordance with a third exemplary embodiment;
FIG. 7 is a representative diagram of a touch screen in accordance with a fourth exemplary embodiment; and
FIG. 8 is a flow chart in accordance with the exemplary embodiment.

### DETAILED DESCRIPTION

The following detailed description is merely illustrative in nature and is not intended to limit the embodiments of the subject matter or the application and uses of such embodiments. Any implementation described herein as exemplary is not necessarily to be construed as preferred or advantageous over other implementations. Furthermore, there is no intention to be bound by any expressed or implied theory presented in the preceding technical field, background, brief summary, or the following detailed description.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

For the sake of brevity, conventional techniques related to graphics and image processing, navigation, flight planning, aircraft controls, aircraft data communication systems, and other functional aspects of certain systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

A user interface, for example a touch screen, includes containers, for example, rectangular areas such as menu buttons, toggle buttons, radio buttons, check boxes buttons, or pull-down menus that may be modified in accordance with the exemplary embodiments. As used herein, touch screen refers to a display sensitive to the touch or approach of another object, for example, a finger or a stylus, by determining pressure from the object, a resistance, a capacitance, and the like. These containers may either increase (expand) or decrease (collapse) in size in response to sensed adverse condition, for example, relative movement between the user interface or the user, that makes it difficult for a user to touch an intended object, that is sensitive to a touch, also known as targets or user controls, during the adverse operation conditions in order to improve a users' ability to reach the desired target on the screen. The most prominent objects may be increased to improve selectability of these interactive screen targets. In some embodiments, the prominent objects are increased in size at the expense of non-prominent objects, non-interactive screen areas, or non-prominent screen areas.

The expanding of a container increases object spacing in a container (the container itself is enlarged), and optionally may increase the size of the objects. Spacing, and optionally size, of the objects is increased in such axis or axes in which the increase of size and spacing provides the highest benefit for the user. Typically, this method increases height and vertical spacing between user controls, because most controls have a larger size in the horizontal axis than in the vertical axis. This is typically the case of a pull down menu.

Generally, there are two directions in which a container may be expanded, for example, vertical and horizontal when viewing a screen. In one aspect of the exemplary embodiments, if a container cannot be expanded in a first direction owing to insufficient space in axis in which the expanded would be most beneficial for the user, for example, vertical, the container is expanded in a second direction, for example, horizontal. In this latter case of horizontal expansion, a first portion of the user controls will remain in the same position while a second portion of the user controls will be moved in the second direction for a distance (typically the width of the container in normal state) in order to improve spacing between controls. Preferably, the objects of the first portion and the objects of the second portion alternate, wherein the second portion is spaced from the first portion. This change in position of adjacent objects increases spacing between objects to minimize selecting adjacent objects by mistake. In some embodiments, the objects may also expand in size.

When the adverse condition has ceased, the container will reduce back to its original shape.

The method may be applied to any display in, for example, avionics or maritime controlled by a pointing device or touch, and may be used on non-integrated Electronic Flight Bags with a touch interface because they are typically not mounted in pilots' primary view area in which the human's hand is not supported (therefore more likely to be subject to movement) with an underlying surface as it is with cursor control device, for example.

The boundaries of the touch sensitive object generally are related to a symbol associated with the object. The touch screen controller will modify the boundaries of the object to shift in position so that it changes position in relation to the symbol. These modifications may be either symmetric or asymmetric, with the boundary being enlarged on only one edge or along only the horizontal axis or the vertical axis, in response to the adverse condition, thereby increasing the area defined by the object.

More specifically, in one exemplary embodiment, a touch screen is provided for adjusting the positioning of user controls or touch sensing objects in response adaptive conditions in which larger touch sensing objects would be beneficial, for example, to movement such as turbulence, aircraft vibration, and/or G forces. The touch screen comprises a display face having a container including a plurality of objects displayed and generally aligned in a first direction. A touch screen controller, in response to the adaptive condition, for example, sensed relative movement between the touch screen and the user, is configured to expand the container further in the first direction and enlarge the objects within the container if there is sufficient space for the expansion. If there is not sufficient room for expansion in the first direction, the container expands in a second direction and repositions second objects, preferably alternating from the first objects, within the second menu in a second direction. A method of operating the touch screen having a first dimension in a first direction, and a second dimension in a second direction, including determining an adaptive condition; displaying a container having a third dimension in the first direction that is less than the first dimension and having a plurality of touch sensitive objects aligned in the first direction; expanding the container further in the first direction to a fourth dimension, when the adaptive condition is determined and if the fourth dimension is less than the first dimension; and expanding the container in a second direction and repositioning a portion of the objects in the second direction when the adaptive condition is determined and if the third dimension is greater than the first dimension.

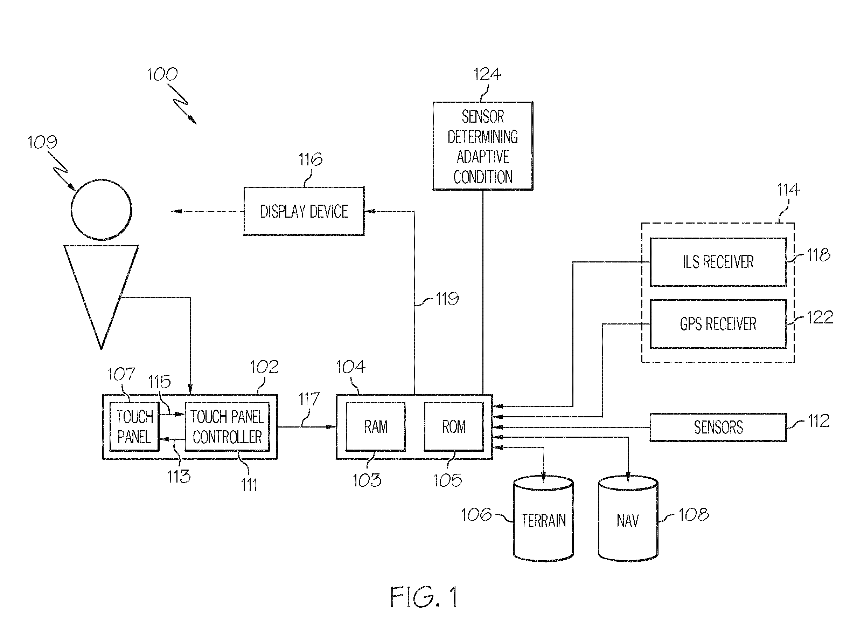

Though the method and touch panel of the exemplary embodiments may be used in any type of electronic device, for example, vehicles and heavy machinery, and small handheld mobile devices such as smart phones, the use in an aircraft system is described as an example. Referring to FIG. 1, a flight deck display system 100 includes a user interface 102, a processor 104, one or more terrain databases 106 sometimes referred to as a Terrain Avoidance and Warning System (TAWS), one or more navigation databases 108, an adaptive (or adverse) condition sensor 124 avionic sensors 112, external data sources 114, one or more display devices 116. The user interface 102 is in operable communication with the processor 104 and is configured to receive input from a user 109 (e.g., a pilot) and, in response to the user input, supplies command signals to the processor 104. The user interface 102 may be any one, or combination, of various known user interface devices including, but not limited to, one or more buttons, switches, or knobs (not shown). In the depicted embodiment, the user interface 102 includes a touch panel 107 and a touch panel controller 111. The touch panel controller 111 provides drive signals 113 to a touch panel 107, and a sense signal 115 is provided from the touch panel 107 to the touch panel controller 111, which periodically provides a controller signal 117 of the determination of a touch to the processor 104. The processor 104 interprets the controller signal 117, determines the application of the digit on the touch panel 107, and provides, for example, a controller signal 117 to the touch panel controller 111 and a signal 119 to the display device 116. Therefore, the user 109 uses the touch panel 107 to provide an input as more fully described hereinafter.

The processor 104 may be implemented or realized with a general purpose processor, a content addressable memory, a digital signal processor, an application specific integrated circuit, a field programmable gate array, any suitable programmable logic device, discrete gate or transistor logic, discrete hardware components, or any combination designed to perform the functions described herein. A processor device may be realized as a microprocessor, a controller, a microcontroller, or a state machine. Moreover, a processor device may be implemented as a combination of computing devices, e.g., a combination of a digital signal processor and a microprocessor, a plurality of microprocessors, one or more microprocessors in conjunction with a digital signal processor core, or any other such configuration. In the depicted embodiment, the processor 104 includes on-board RAM (random access memory) 103, and on-board ROM (read-only memory) 105. The program instructions that control the processor 104 may be stored in either or both the RAM 103 and the ROM 105. For example, the operating system software may be stored in the ROM 105, whereas various operating mode software routines and various operational parameters may be stored in the RAM 103. The software executing the exemplary embodiment is stored in either the ROM 105 or the RAM 103. It will be appreciated that this is merely exemplary of one scheme for storing operating system software and software routines, and that various other storage schemes may be implemented.

The memory 103, 105 may be realized as RAM memory, flash memory, EPROM memory, EEPROM memory, registers, a hard disk, a removable disk, a CD-ROM, or any other form of storage medium known in the art. In this regard, the memory 103, 105 can be coupled to the processor 104 such that the processor 104 can be read information from, and write information to, the memory 103, 105. In the alternative, the memory 103, 105 may be integral to the processor 104. As an example, the processor 104 and the memory 103, 105 may reside in an ASIC. In practice, a functional or logical module/component of the display system 100 might be realized using program code that is maintained in the memory 103, 105. For example, the memory 103, 105 can be used to store data utilized to support the operation of the display system 100, as will become apparent from the following description.

No matter how the processor 104 is specifically implemented, it is in operable communication with the terrain databases 106, the navigation databases 108, and the display devices 116, and is coupled to receive various types of inertial data from the sensors 112, and various other avionics-related data from the external data sources 114. The processor 104 is configured, in response to the inertial data and the avionics-related data, to selectively retrieve terrain data from one or more of the terrain databases 106 and navigation data from one or more of the navigation databases 108, and to supply appropriate display commands to the display devices 116. The display devices 116, in response to the display commands, selectively render various types of textual, graphic, and/or iconic information.

The adverse condition sensor 124 may be disposed within the display device 116, on the user 109, or separate from the display device 116 and the user 109. However the adverse condition sensor 110 is disposed, it senses adverse conditions, for example, relative movement between the display device 116 and the user 109.

The terrain databases 106 include various types of data representative of the terrain over which the aircraft is flying, and the navigation databases 108 include various types of navigation-related data. The sensors 112 may be implemented using various types of inertial sensors, systems, and or subsystems, now known or developed in the future, for supplying various types of inertial data, for example, representative of the state of the aircraft including aircraft speed, heading, altitude, and attitude. The ILS 118 provides aircraft with horizontal (or localizer) and vertical (or glide slope) guidance just before and during landing and, at certain fixed points, indicates the distance to the reference point of landing on a particular runway. The GPS receiver 122 is a multi-channel receiver, with each channel tuned to receive one or more of the GPS broadcast signals transmitted by the constellation of GPS satellites (not illustrated) orbiting the earth.

The display devices 116, as noted above, in response to display commands supplied from the processor 104, selectively render various textual, graphic, and/or iconic information, and thereby supplies visual feedback to the user 109. It will be appreciated that the display device 116 may be implemented using any one of numerous known display devices suitable for rendering textual, graphic, and/or iconic information in a format viewable by the user 109. Non-limiting examples of such display devices include various cathode ray tube (CRT) displays, and various flat panel displays such as various types of LCD (liquid crystal display) and TFT (thin film transistor) displays. The display devices 116 may additionally be implemented as a panel mounted display, or any one of numerous known technologies. It is additionally noted that the display devices 116 may be configured as any one of numerous types of aircraft flight deck displays. For example, it may be configured as a multi-function display, a horizontal situation indicator, or a vertical situation indicator, just to name a few. In the depicted embodiment, however, one of the display devices 116 is configured as a primary flight display (PFD).

In operation, the display device 116 is also configured to process the current flight status data for the host aircraft. In this regard, the sources of flight status data generate, measure, and/or provide different types of data related to the operational status of the host aircraft, the environment in which the host aircraft is operating, flight parameters, and the like. In practice, the sources of flight status data may be realized using line replaceable units (LRUs), transducers, accelerometers, instruments, sensors, and other well known devices. The data provided by the sources of flight status data may include, without limitation: airspeed data; groundspeed data; altitude data; attitude data, including pitch data and roll data; yaw data; geographic position data, such as GPS data; time/date information; heading information; weather information; flight path data; track data; radar altitude data; geometric altitude data; wind speed data; wind direction data; etc. The display device 116 is suitably designed to process data obtained from the sources of flight status data in the manner described in more detail herein.

A touch screen is disclosed having at least one container configured to display a plurality of symbols. Symbols as used herein are defined to include alphanumeric characters, icons, signs, words, terms, phrases, and menu items. A particular symbol is selected by sensing the application (touch) of a digit, such as a finger or a stylus, to a touch-sensitive object associated with that symbol. In some exemplary embodiments, the digit may be swiped, or moved, in a particular direction to enable a desired function. Each display region including a symbol has a touch-sensing object associated therewith for sensing the application and/or movement of the digit or digits.

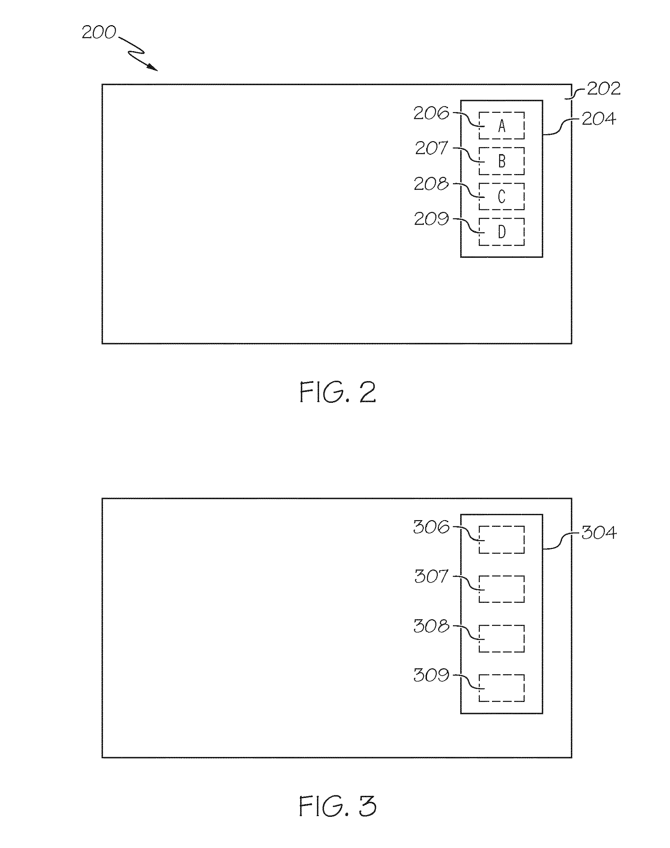

Referring to FIG. 2, a touch screen 200 in accordance with a first exemplary embodiment includes a face 202 displaying a container, or menu 204 for example, including four objects 206, 207, 208, 209. The objects are sensitive to a touch for selecting a function and typically contain an icon representative of the function (shown for example, as the letters A, B, C, D, respectively). Objects 206, 207, 208, 209 (shown as dotted lines) are positioned with respect to the icons A, B, C, and D, respectively, and may include a solid outline (not shown), such as a rectangle or circle, surrounding the icons A, B, C, D. The solid outline preferable would cover the same area as the objects 206, 207, 208, 209, or be slightly within. The objects 206, 207, 208, 209 are defined by selected pixels as determined by software in the processor 104. A touching of one of the objects 206, 207, 208, 209 is communicated to the processor 104 and the function associated with the respective symbol 206, 207, 208, 209 will be selected.

However, when the touch screen 200 and/or the user is subject to adverse conditions, for example, turbulence, G forces, and/or equipment vibrations as sensed by the system determining adaptive conditions 124, it becomes difficult for the user to touch the intended object since the intended object (the entire touch screen 200) is moving in relation to the user.

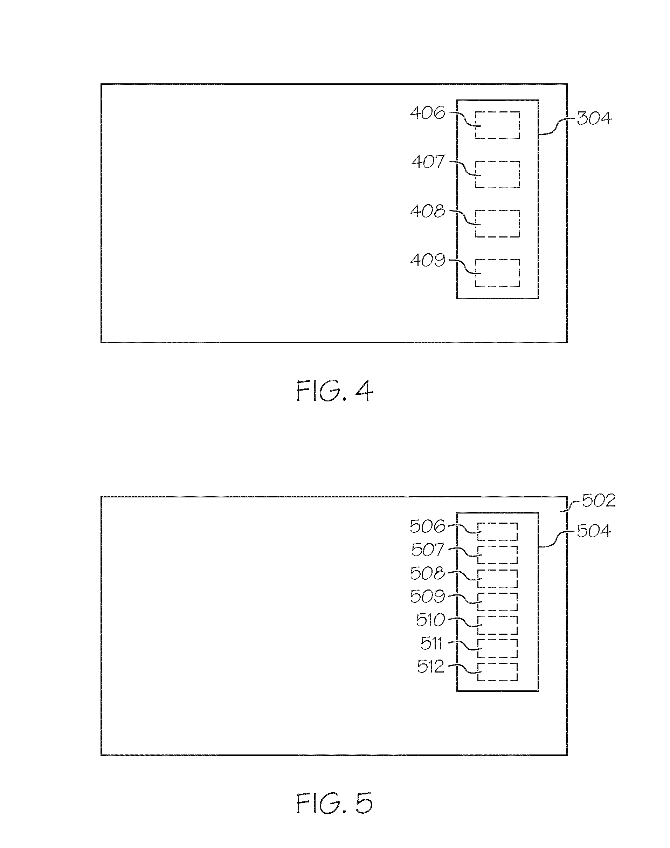

In accordance with the first exemplary embodiment, when the adverse conditions are determined (sensed) by the system 124, the container 204 expands in a first direction (vertically as shown in FIG. 3) to create the container 304 and the spacing between the objects 306, 307, 308, 309 is increased, thereby increasing the probability of the user being able to touch the intended object 306, 307, 308, 309. Optionally, and in accordance with a second exemplary embodiment of FIG. 4, the objects 406, 407, 408, 409 are increased in size over the objects 306, 307, 308, 309 of FIG. 3.

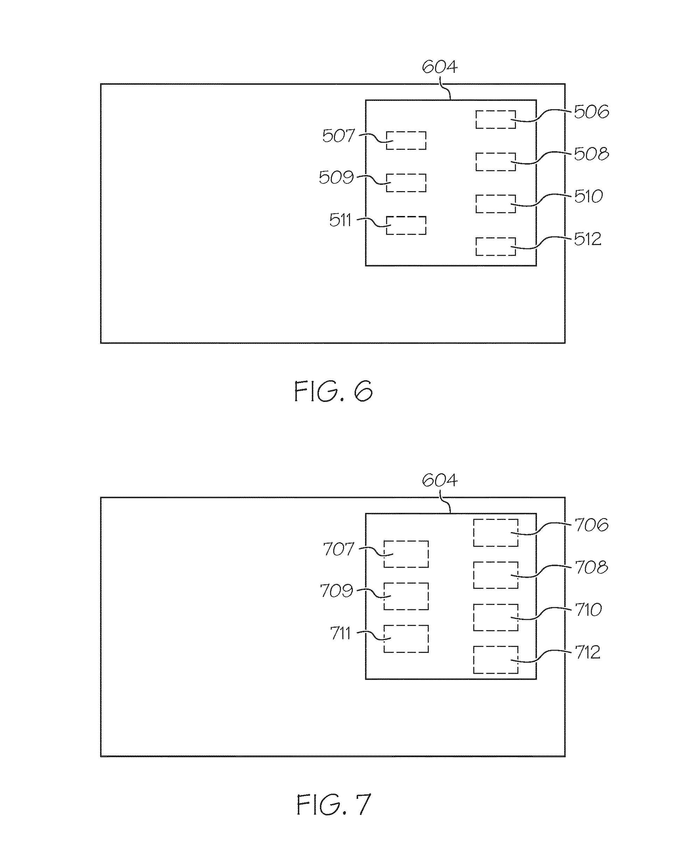

If, as shown with the touch screen 500 of FIG. 5, the container 505 contains a number of objects 506, 507, 508, 509, 510, 511, 512 are such that the container 504 is unable to expand in a first direction (vertically as shown) and be displayed on the touch screen 500, the container 504 expands in a second direction (horizontal as shown) to create the container 604 (FIG. 6) and a portion of the icons, for example icons 507, 509. 511 are spaced in the second direction from a second portion of the icons, for example, 506, 508, 510, and 512. Preferably, alternating objects 506, 507, 508, 509, 510, 511, 512 are repositioned in the second direction as shown. Optionally, and in accordance with a fourth exemplary embodiment of FIG. 7, the icons 706, 707, 708, 709, 710, 711, 712 are increased in size over the objects 506, 507, 508, 509, 510, 511, 512 of FIG. 6.

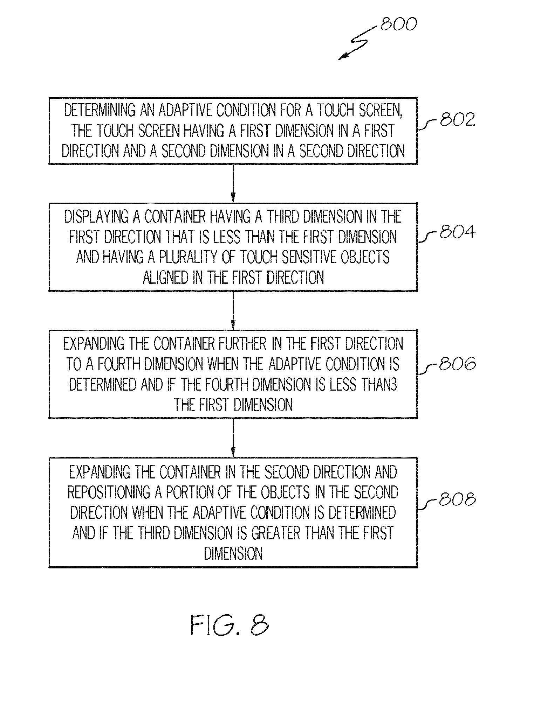

FIG. 8 is a flow chart that illustrates a touch screens process suitable for use with a flight deck display system such as the user interface 102. Process 800 represents an implementation of a method for selecting symbols on an onboard display element of a host aircraft. The various tasks performed in connection with process 800 may be performed by software, hardware, firmware, or any combination thereof. For illustrative purposes, the following description of process 800 may refer to elements mentioned above in connection with FIGS. 2 through 7. In practice, portions of process 800 may be performed by different elements of the described system, e.g., a processor or a display element. It should be appreciated that process 800 may include any number of additional or alternative tasks, the tasks shown in FIG. 8 need not be performed in the illustrated order, and process 800 may be incorporated into a more comprehensive procedure or process having additional functionality not described in detail herein. Moreover, one or more of the tasks shown in FIG. 8 could be omitted from an embodiment of the process 800 as long as the intended overall functionality remains intact.

Referring to the flow chart of FIG. 8, an adaptive condition of a touch screen is determined 802, the touch screen having a first dimension in a first direction and a second dimension in a second direction. A container is displayed 804 having a third dimension in the first direction that is less than the first dimension and having a plurality of touch sensitive objects aligned in the first direction. The container is further expanded 806 in the first direction to a fourth dimension when the adaptive condition is determined and if the fourth dimension is less than the first dimension. The container is expanded in the second direction and a portion of the objects are repositioned 808 in the second direction when the adaptive condition is determined and if the third dimension is greater than the first dimension.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. An apparatus comprising:
a sensor configured to sense movement;
a touch screen having a first dimension in a first direction and a second dimension in a second direction, and configured to:
display a menu having a third dimension in the first direction that is less than the first dimension, and that displays a plurality of touch sensitive objects aligned in the first direction; and
a touch screen controller configured to, when the movement is sensed:
expand the menu further in the first direction to a fourth dimension, if the fourth dimension is less than the first dimension;
expand the container in the second direction and repositioning a portion of the objects in the second direction if the fourth dimension would be greater than the first dimension.

2. The apparatus of claim 1 wherein the touch screen controller is further configured to:
enlarge the second objects when the movement is sensed.

3. The touch screen of claim 1 wherein the touch screen controller is further configured to:
enable a function in response to the at least one touch.

4. The touch screen of claim 1 wherein the touch sensitive objects each comprise a boundary and the touch screen controller is configured to:
adjust the boundary.

5. The touch screen of claim 1 wherein the touch sensitive objects each comprise a boundary and the touch screen controller is configured to:
enlarge the boundary.

6. The touch screen of claim 1 wherein the portion of the objects repositioned comprise alternating objects if the fourth dimension would greater than the first dimension.

7. The touch screen of claim 1 wherein the sensor is further configured to:
determine relative movement between the touch screen and a user.

8. The touch screen of claim 1 wherein the sensor is further configured to:
determine at least one of a vibration, turbulence, and a G force.

9. A method for modifying the size of a container on a touch screen, the touch screen having a first dimension in a first direction and a second dimension in a second direction, comprising:
determining an adaptive condition;
displaying the container having a third dimension in the first direction that is less than the first dimension and having a plurality of touch sensitive objects aligned in the first direction;
expanding the container further in the first direction to a fourth dimension, when the adaptive condition is determined and if the fourth dimension is less than the first dimension; and
expanding the container in a second direction and repositioning a portion of the objects in the second direction when the adaptive condition is determined and if the third dimension is greater than the first dimension.

10. The method of claim 9 further comprising:
repositioning alternating objects if the fourth dimension is greater than the first dimension.

11. The method of claim 9 further comprising:
enlarging the objects when the adaptive condition is determined.

12. The method of claim 9 further comprising:
enlarging the objects when the adaptive condition is determined.

13. The method of claim 9 wherein determining an adaptive condition comprises:
sensing relative movement between the touch screen and a user.

14. The method of claim 9 wherein determining an adaptive condition comprises:
sensing at least one of a vibration, turbulence, and G forces.
